# NEUE EUROPÄISCHE PATENTSCHRIFT

(11) **EP 0 888 580 B2**
(45) Veröffentlichungstag und Bekanntmachung des Hinweises auf die Entscheidung über den Einspruch: **03.05.2006**
(45) Hinweis auf die Patenterteilung: 13.06.2001
(21) Anmeldenummer: 97920547.3
(22) Anmeldetag: 18.03.1997
(51) Int. Cl.: G05B 19/042

(54) **HANDBEDIENGERÄT FÜR EINE PROGRAMMIERBARE ELEKTRONISCHE STEUEREINHEIT**
HAND-HELD CONTROL DEVICE FOR A PROGRAMMABLE ELECTRONIC CONTROL UNIT
APPAREIL DE CONTROLE MANUEL POUR UNITE DE COMMANDE ELECTRONIQUE PROGRAMMABLE

(30) Priorität: 19.03.1996 DE 19613027
(43) Veröffentlichungstag der Anmeldung: 07.01.1999
(73) Patentinhaber: SIEMENS AKTIENGESELLSCHAFT, 80333 München (DE)
(72) Erfinder: ETTE, Bernd, 15528 Mönchwinkel (DE); FRÖHLICH, Paul, D-92237 Sulzbach-Rosenberg (DE)
(86) Internationale Anmeldenummer: PCT/DE1997/000617
(87) Internationale Veröffentlichungsnummer: WO 1997/035239

(56) Entgegenhaltungen:
- EP-A- 0 136 579
- EP-A- 0 549 541
- WO-A-86/05945
- DE-A- 3 832 123
- DE-A- 4 236 247
- DE-C- 4 414 009
- DE-U- 29 501 535
- FR-A- 2 687 807
- US-A- 5 187 655
- BECKER M. ET AL: Programmiergerät PG710, engineering & automation 13, 1991, H.2,Seite 8,9
- EUCHNER: Programmierbarer Winkelpositionsgeber, 1990.

## Beschreibung

Die Erfindung betrifft ein Handbediengerät zur Verbindung mit einer als Auslöser ausgebildeten Steuereinheit eines Leistungsschalters oder Motorantriebes, wobei die Steuereinheit einen programmierbaren Speicherschaltkreis zur Speicherung von Betriebskennwerten aufweist und wobei ferner das Handbediengerät eine Anzeigevorrichtung zur Darstellung aus der Steuereinheit durch ein Übertragungsmittel auf das Handbediengerät übertragener Betriebskennwerte aufweist sowie mit einem elektronischen Datenspeicher zur Speicherung der aus der Steuereinheit übertragenen Betriebskennwerte und einer Mikroprozessorschaltung versehen ist.

Ein Handbediengerät dieser Art ist durch die US 4 751 605 bekanntgeworden. In Verbindung mit Leistungsschaltern ist eine Übertragung von Daten aus den Steuereinheiten auf das Handbediengerät vorgesehen, um die elektronischen Überstromauslöser der Leistungsschalter vereinfachen zu können, indem für die Anzeige der eingestellten Parameter mehrerer Leistungsschalter nur ein Handbediengerät bereitgestellt wird. Eine Übertragung von Daten in umgekehrter Richtung ist nicht vorgesehen.

Ferner ist durch die US 4 272 816 A1 eine Einstellhilfe für die Auslösekurve eines Schaltgerätes eines Leistungsschalters bekanntgeworden. Die Einstellhilfe hat dabei die Gestalt einer Matrixanordnung von Einstecköffnungen für Programmierstifte. Hierdurch ist die Funktion der Einstellhilfe auf die Einstellung einer Auslösekennlinie eines Mikrocomputers des Schutzgerätes beschränkt.

Der Erfindung liegt die Aufgabe zugrunde, ein Handbediengerät mit erweiterten Funktionen bereitzustellen, das nicht nur für Leistungsschalter, sondern auch für andere mit programmierbaren elektronischen Auslösern ausgerüstete Geräte, z. B. Motorsteuerungen verwendbar ist.

Gemäß der Erfindung wird diese Aufgabe dadurch gelöst, daß das Handbediengerät ein Tastenfeld zur Erstellung veränderter Betriebskennwerte und zur Speicherung dieser veränderten Betriebskennwerte in dem elektronischen Datenspeicher aufweist und daß die veränderten Betriebskennwerte aus dem elektronischen Datenspeicher auf die Steuereinheit des elektrischen Gerätes über das Übertragungsmittel rückübertragbar sind.

Durch die Benutzung eines Handbediengerätes nach der Erfindung wird bei der Verbindung mit dem betreffenden Gerät, z. B. Leistungsschalter oder Motorsteuerung, dem Benutzer angezeigt, welche betrieblichen Parameter und ggf. welche Status- und Diagnosewerte derzeit in der Steuereinheit gespeichert bzw. programmiert sind. Diese Parameter werden in den elektronischen Datenspeicher des Handbediengerätes eingelesen und stehen nun dort zur Bearbeitung zur Verfügung. Eine Veränderung der Parameter ist nun sowohl bei bestehender Verbindung mit der Steuereinheit des Geräts oder nach erfolgter Trennung von dem Gerät durchführbar. Dadurch, daß die Betriebskennwerte in dem Handbediengerät gespeichert sind, besteht insbesondere die Möglichkeit, die Auslöser mehrerer Geräte, z. B. mehrere Leistungsschalter in einer Niederspannungs-Schaltanlage, auf gleiche Betriebskennwerte einzustellen.

Der Anwendungsbereich des Handbediengerätes kann noch dadurch in vorteilhafter Weise erweitert werden, daß zusätzlich ein veränderbarer Programmspeicher zur Speicherung eines an die zu verarbeitenden Betriebskennwerte angepaßten Anwendungsprogrammes enthalten ist. Auf diese Weise ist es möglich, das Handbediengerät mit einem an unterschiedliche Leistungsschalter bzw. Motorsteuergeräte angepaßten Anwendungsprogramm zu laden, das die Darstellung, die Abfrage und die Veränderung der Betriebskennwerte in bestimmter Weise bearbeitet.

Um die Anwendung der vorstehend erwähnten unterschiedlichen Anwendungsprogramme für das Handbediengerät zu erleichtern, kann ein internes Betriebssystem für die Mikroprozessorschaltung mit einer Prüfroutine für das Vorhandensein eines in dem Speicherschaltkreis der Steuereinheit hinterlegten Anwendungsprogrammes zwecks Übertragung in den Programmspeicher vorgesehen sein. Diese Prüfroutine kann selbsttätig ablaufen, sobald das Handbediengerät mit dem betreffenden Gerät verbunden und das Handbediengerät aktiviert ist.

Demgemäß kann ein Verfahren zum Parametrieren von Betriebskennwerten eines elektrischen Gerätes unter Verwendung eines Handbediengerätes der vorstehend erläuterten Gestaltung, wobei das Gerät eine elektronische Steuereinheit mit einem Speicherschaltkreis für die Betriebskennwerte umfaßt, folgende Verfahrensschritte aufweisen:
- Verbinden des Handbediengerätes mit dem Gerät,
- Auslesen und Anzeigen in dem Speicherschaltkreis der Steuereinheit gespeicherter Betriebskennwerte mittels der Anzeigevorrichtung,
- Speichern der den ausgelesenen Betriebskennwerten entsprechenden Daten unter einer wählbaren Adresse in dem Datenspeicher des Handebediengerätes,
- Ändern wenigstens eines Betriebskennwertes durch Eingabe wenigstens eines Befehles am Handbediengerät,
- Übertragung des geänderten Betriebskennwertes auf die Steuereinheit und Rückmeldung der vollzogenen Übertragung zum Handbediengerät und
- Trennung des Handbediengerätes von dem Gerät.

Ein abgewandeltes Verfahren nach der Erfindung dient gleichfalls zum Parametrieren von Betriebskennwerten eines elektrischen Gerätes unter Verwendung eines Handbediengerätes, das zusätzlich einen veränderbaren Programmspeicher zur Speicherung eines an die zu verarbeitenden Betriebskennwerte angepaßten Anwendungsprogrammes enthält. Dabei sind folgende Verfahrensschritte vorgesehen:
- Verbinden des Handbediengerätes mit dem Gerät,
- Auslesen und Anzeigen in dem Speicherschaltkreis der Steuereinheit gespeicherter Betriebskennwerte mittels der Anzeigevorrichtung,
- Speichern der den ausgelesenen Betriebskennwerten entsprechenden Daten unter einer wählbaren Adresse in dem Datenspeicher des Handbediengerätes,
- Trennung des Handbediengerätes von dem Gerät,
- Veränderung der Betriebskennwerte, ggf. unter Benutzung des zuvor übertragenden Anwendungsprogrammes, und
- erneutes Verbinden des Handbediengerätes mit dem selben oder einem gleichen Gerät und Übertragen der geänderten Betriebskennwerte auf die elektronische Steuereinheit des Gerätes.

Die Erfindung wird im folgenden anhand der Figuren näher erläutert.

Die Figur 1 zeigt schematisch einen Teil einer Niederspannungs-Schaltanlage mit vier angedeuteten Leistungsschaltern sowie einem Handbediengerät.

Die Figur 2 zeigt in vergrößerter Darstellung das Handbediengerät gemäß der Figur 1.

In der Figur 3 ist ein Blockschaltbild des Handbediengerätes gemäß der Figur 2 dargestellt.

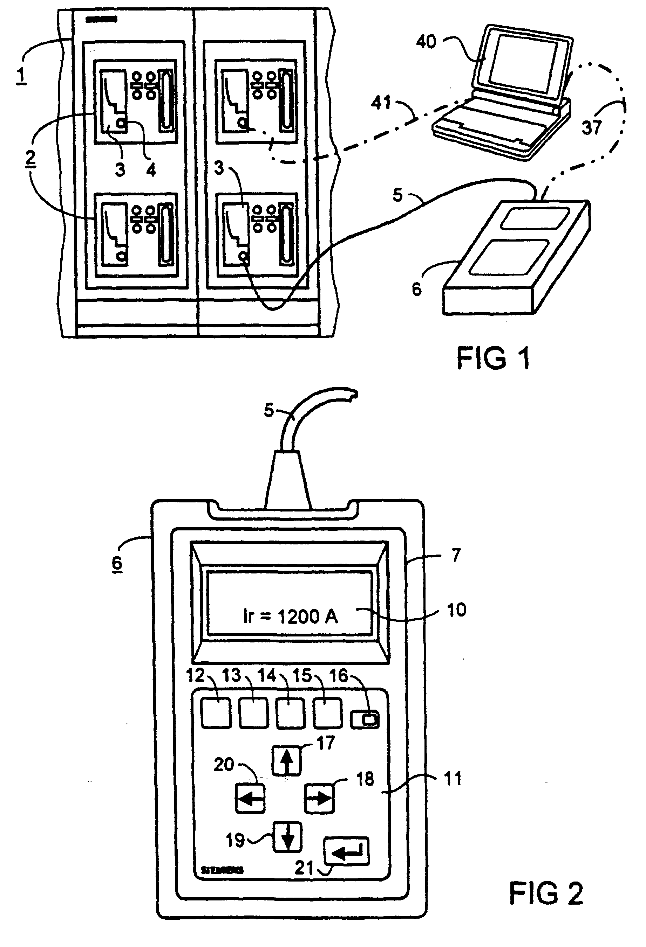

In der Figur 1 sind zwei Felder einer Niederspannungs-Schaltanlage 1 mit jeweils zwei übereinander angeordneten Niederspannungs-Leistungsschaltern 2 gezeigt. Jeder der Niederspannungs-Leistungsschalter 2 enthält eine elektronische Steuereinheit 3 in der Gestalt eines elektronischen Auslösers. In bekannter Weise enthält die Steuereinheit 3 einen Speicherschaltkreis zur Speicherung der Betriebskennwerte jedes Leistungsschalters 2. Hierzu gehören insbesondere der Nennstrom und hiervon abhängige Auslösekennwerte sowie eine auf den Nennstrom bezogene Auslösekennlinie. Jede der Steuereinheiten 2 ist für Zwecke der Datenübertragung mit einer bidirektionalen Anschlußbuchse 4 versehen, die mittels einer Verbindungsleitung 5 mit einem Handbediengerät 6 verbindbar ist.

Einzelheiten des Handbediengerätes 6 werden nun anhand der Figur 2 erläutert. Das Handbediengerät 6 weist für die freizügige Benutzung geeignete Abmessungen auf, die sich an anderen bekannten Handbediengeräten orientieren. Auf einer frontseitigen Bedienfläche 7 ist oben eine Anzeigevorrichtung 10 angeordnet, bei der es sich z. B. um ein zweizeiliges LCD-Display handeln kann. Unterhalb der Anzeigevorrichtung 10 befindet sich auf der Bedienfläche 7 ein Tastenfeld 11, das aus einer oberen Reihe von Funktionstasten 12, 13, 14 und 15 sowie einem Schalter 16 zum Ein- und Ausschalten des Handbediengerätes 6 aufweist. Unterhalb der genannten Reihe von Funktionstasten befinden sich mit Pfeilen versehene Richtungstasten 17, 18, 19 und 20, sowie eine Eingabetaste 21. Die anhand der Figur 1 erwähnte Verbindungsleitung 5 mündet an der oberen Stirnseite des Handbediengerätes 6.

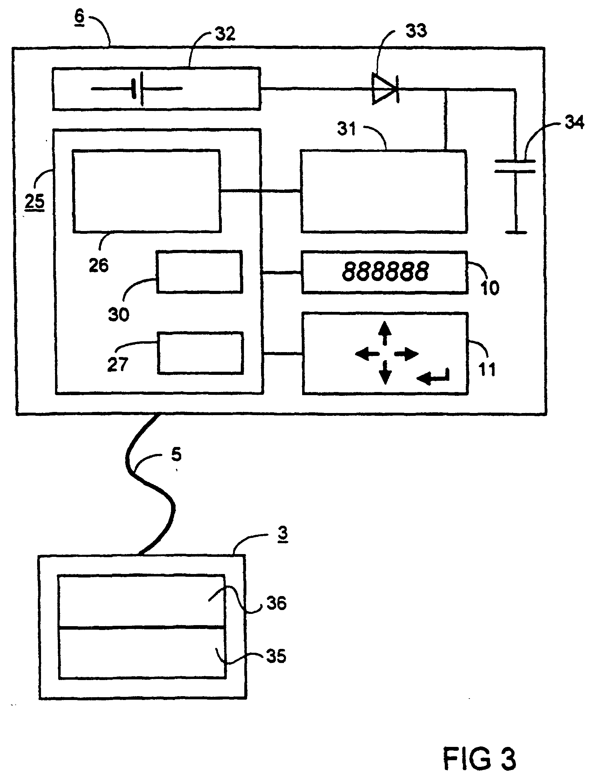

Bevor auf die Bedienungsweise näher eingegangen wird, sei zunächst der Aufbau des Handbediengerätes 6 anhand des in der Figur 3 gezeigten Blockschaltbildes erläutert. Eine Mikroprozessoreinheit 25 mit einem Schreib-Lesespeicher 26, einem Lesespeicher 27 und einem beschreibbaren und löschbaren Programmspeicher30 auf. Ferner enthält das Handbediengerät 6 einen zweiten Datenspeicher 31 sowie schon die erwähnte Anzeigevorrichtung 10 und das vereinfacht angedeutete Tastenfeld 11. Ferner ist das Handbediengerät 6 mit einer Stromversorgungseinrichtung versehen, die eine Batterie 32 sowie einen über eine Diode 33 aufladbaren Speicherkondensator 34 großer Kapazität umfaßt. Hierdurch wird derzusätzliche Datenspeicher 31 auch bei Entnahme der Batterie 32 gepuffert. Über die schon erwähnte Verbindungsleitung 5 ist das Handbediengerät 6 mit der Steuereinheit 3 verbunden, in der ein Mikroprozessor 35 und ein Speicherschaltkreis 36 angedeutet sind.

Nach der Verbindung des Handbediengerätes 6 mit einem Leistungsschalter 2 etwa entsprechend der Figur 1 und Einschalten des Handbediengerätes 6 mittels des Schalters 16 kann der Benutzer durch Betätigen der Pfeiltasten 17, 18, 19 und 20 zunächst ein gewünschtes Menü auswählen. Ist das Gerät ein Leistungsschalter, wie ihn die Figur 1 zeigt, kann insbesondere ein Menü für die Schutzfunktionen des Leistungsschalters 2 vorgesehen sein. Die Anzeigevorrichtung 10 kann dabei dem Benutzer neben Zahlenwerten für Betriebskennwerte, z. B. einen Auslösestrom von 1200 A entsprechend der Figur 2, Hinweise anzeigen, in welchem Modus sich das Handbediengerät 6 befindet und wie die dargestellten Werte veränderbar sind. Eine Bestätigung eines veränderten Wertes erfolgt durch Betätigen der Eingabetaste 21, nachdem mittels der Pfeiltasten 18 bzw. 20 der Einstellwert vergrößert bzw. verkleinert worden ist. Die erwähnten Funktionstasten 12, 13, 14 und 15 können wahlweise mit Gruppenfunktionen belegt sein. Auch kann eine der Funktionstasten als Rückstelltaste (RESET) geschaltet sein.

Die jeweils zu verarbeitenden Daten befinden sich nicht nur in dem Schreib-Lesespeicher 26 der Mikroprozessoreinheit 25, sondern stehen auch in dem zusätzlichen Datenspeicher 31 zur Verfügung, wo sie erhalten bleiben, wenn die Verbindung zwischen dem Leistungsschalter 2 und dem Handbediengerät 6 unterbrochen wird. Auf diese Weise kann ein von der Steuereinheit2 übertragener Datensatz in dem Handbediengerät 6 bearbeitet werden, d. h., die verschiedenen Betriebskennwerte können verändert und in veränderter Form gespeichert werden. Anschließend kann das Handbediengerät 6 mit demselben Leistungsschalter 2 oder einem der anderen gezeigten Leistungsschalter 2 verbunden werden, um die veränderten Betriebskennwerte auf die Steuereinheiten 3 zu übertragen. Die beschriebene Betriebsweise erleichtert es außerordentlich, in größeren Schalt- oder Maschinenanlagen aus betrieblichen Gründen erforderliche Anpassungen vorzunehmen.

In der Figur 1 ist darüber hinaus angedeutet, daß das Handbediengerät 6 mittels einer Verbindungsleitung 37 mit einem transportablen Kleincomputer 40 verbunden werden kann. Da dieser über einen vollwertigen Bildschirm verfügt, können auf diese Weise nicht nur einzelne Betriebskennwerte, sondern in übersichtlicher, beispielsweise tabellarischer Form, alle aus der Steuereinheit 3 auf das Handbediengerät 6 übertragenen Betriebskennwerte und ggf. Status- oder Diagnosewerte zur Darstellung gebracht werden. Ebenso ist es möglich, mittels eines angepaßten Anwendungsprogrammes die Betriebskennwerte mittels des Kleincomputers 40 zu bearbeiten, wobei aufgrund des größeren Bildschirmes die Möglichkeit besteht, Kennlinien bildlich zur Anzeige zu bringen. Anschließend kann der veränderte Satz von Betriebskennwerten über die Verbindungsleitung 37 auf das Handbediengerät 6 zurück übertragen werden. Obwohl es möglich ist, wie in der Figur 1 angedeutet, den Kleincomputer 40 mittels einer Verbindungsleitung 41 direkt mit einer der Steuereinheiten 3 eines Leistungsschalters 2 zu verbinden, wird es sich empfehlen, die geschilderte Bearbeitung der Betriebskennwerte außerhalb der Schaltanlage durch die Verbindung von Handbediengerät 6 und Kleincomputer 40 beispielsweise in einem Büroraum vorzunehmen.

## Patentansprüche

1. Handbediengerät (6) zur Verbindung mit einer als Auslöser ausgebildeten Steuereinheit (3) eines Leistungsschalters (2) oder Motorantriebes, wobei die Steuereinheit einen programmierbaren Speicherschaltkreis (36) zur Speicherung von Betriebskennwerten aufweist und wobei ferner das Handbediengerät (6) eine Anzeigevorrichtung (10) zur Darstellung aus der Steuereinheit (3) durch ein Übertragungsmittel (5) auf das Handbediengerät (6) übertragener Betriebskennwerte aufweist sowie mit einem elektronischen Datenspeicher (31) zur Speicherung der aus der Steuereinheit (3) übertragenen Betriebskennwerte und einer Mikroprozessorschaltung (25) versehen ist,
**dadurch gekennzeichnet, daß** das Handbediengerät (6) ein Tastenfeld (11) zur Erstellung veränderter Betriebskennwerte und zur Speicherung dieser veränderten Betriebskennwerte in dem elektronischen Datenspeicher (31) aufweist und daß die veränderten Betriebskennwerte aus dem elektronischen Datenspeicher (31) auf die Steuereinheit (3) über das Übertragungsmittel (5) rückübertragbar sind.

2. Handbediengerät nach Anspruch 1,
**dadurch gekennzeichnet , daß** zusätzlich ein veränderbarer Programmspeicher (30) zur Speicherung eines an die zu verarbeitenden Betriebskennwerte angepaßten Anwendungsprogrammes enthalten ist.

3. Handbediengerät nach Anspruch 2,
**gekennzeichnet durch** ein Betriebssystem für die Mikroprozessorschaltung (25) mit einer Prüfroutine für das Vorhandensein eines in dem Speicherschaltkreis (36) der Steuereinheit (3) hinterlegten Anwendungsprogrammes zwecks Übertragung in den Programmspeicher (30).

4. Verfahren zum Parametrieren von Betriebskennwerten eines elektrischen Gerätes unter Verwendung eines Handbediengerätes (6) nach einem der vorangehenden Ansprüche,
**gekennzeichnet durch** folgende Schritte:
- Verbinden des Handbediengerätes (6) mit dem Gerät (2),
- Auslesen und Anzeigen in dem Speicherschaltkreis der Steuereinheit (3) gespeicherter Betriebskennwerte mittels der Anzeigevorrichtung (10),
- Speichern der den ausgelesenen Betriebskennwerten entsprechenden Daten unter einer wählbaren Adresse in dem Datenspeicher (31) des Handbediengerätes (6),
- Ändern wenigstens eines Betriebskennwertes durch Eingabe wenigstens eines Befehles am Handbediengerät(6),
- Übertragung des geänderten Betriebskennwertes auf die Steuereinheit (3) und Rückmeldung der vollzogenen Übertragung zum Handbediengerät und
- Trennung des Handbediengerätes (6) von dem Gerät (2).

5. Verfahren zum Parametrieren von Betriebskennwerten eines elektrischen Gerät (2) unter Verwendung eines Handbediengerätes (6) nach einem der vorangehenden Ansprüche,
**gekennzeichnet durch** folgende Schritte:
- Verbinden des Handbediengerätes (6) mit dem Gerät (2),
- Auslesen und Anzeigen in dem Speicherschaltkreis der Steuereinheit (3) gespeicherter Betriebskennwerte mittels der Anzeigevorrichtung (10),
- Speichern der den ausgelesenen Betriebskennwerten entsprechenden Daten unter einer wählbaren Adresse in dem Datenspeicher (31) des Handbediengerätes (6),
- Trennung des Handbediengerätes (6) von dem Gerät,
- Veränderung der Betriebskennwerte mittels des Anwendungsprogrammes,
- erneutes Verbinden des Handbediengerätes (6) mit dem selben oder einem gleichen Gerät und Übertragen der geänderten Betriebskennwerte auf die elektronische Steuereinheit (3) des Gerätes.

## Claims

1. Hand-held controller (6) for connection to a control unit (3) - formed as a release - of a circuit-breaker (2) or motor drive, the control unit having a programmable memory circuit (36) for storing operating characteristic values, and the hand-held controller (6) furthermore having a display device (10) for displaying operating characteristic values transmitted from the control unit (3) to the hand-held controller (6) by a transmission means (5), and being provided with an electronic data memory (31) for storing the operating characteristic values transmitted from the control unit (3) and with a microprocessor circuit (25), **characterized in that** the hand-held controller (6) has a keypad (11) for creating altered operating characteristic values and for storing these altered operating characteristic values in the electronic data memory (31), and **in that** the altered operating characteristic values can be transmitted back from the electronic data memory (31) to the control unit (3) via the transmission means (5).

2. Hand-held controller according to Claim 1, **characterized in that** an alterable program memory (30) for storing an application program which is matched to the operating characteristic values to be processed is additionally contained.

3. Hand-held controller according to Claim 2, **characterized by** an operating system for the microprocessor circuit (25) with a test routine for the presence of an application program, stored in the memory circuit (36) of the control unit (3), for the purpose of transmission to the program memory (30).

4. Method for the parameterization of operating characteristic values of an item of electrical equipment using a hand-held controller (6) according to one of the preceding claims, **characterized by** the following steps:
- connection of the hand-held controller (6) to the equipment (2).
- read-out and display of operating characteristic values, which are stored in the memory circuit of the control unit (3), by means of the display device (10),
- storage of the data which corresponds to the operating characteristic values read out at a selectable address in the data memory (31) of the hand-held controller (6),
- changing of at least one operating characteristic value by entering at least one command on the hand-held controller (6),
- transmission of the changed operating characteristic value to the control unit (3) and acknowledgement to the hand-held controller that transmission has been completed, and
- disconnection of the hand-held controller (6) from the equipment (2).

5. Method for the parameterization of operating characteristic values of an item of electrical equipment (2) using a hand-held controller (6) according to one of the preceding claims, **characterized by** the following steps:
- connection of the hand-held controller (6) to the equipment (2).
- read-out and display of operating characteristic values, which are stored in the memory circuit of the control unit (3), by means of the display device (10),
- storage of the data which corresponds to the operating characteristic values read out at a selectable address in the data memory (31) of the hand-held controller (6),
- disconnection of the hand-held controller (6) from the equipment,
- alteration of the operating characteristic values by means of the application program,
- renewed connection of the hand-held controller (6) to the same or an identical item of equipment and transmission of the changed operating characteristic values to the electronic control unit (3) of the equipment.

## Revendications

1. Appareil (6) de contrôle manuel pour la liaison à une unité (3) de commande, réalisée en déclencheur, d'un disjoncteur (2) ou d'un dispositif d'entraînement par moteur, l'unité de commande comportant un circuit (36) de mémoire programmable pour la mise en mémoire de valeurs caractéristiques de fonctionnement et l'appareil (6) de contrôle manuel comportant de plus un dispositif (10) d'affichage pour représenter des valeurs caractéristiques de fonctionnement transmises de l'unité (3) de commande à l'appareil (6) de contrôle manuel par un moyen (5) de transmission et étant muni d'une mémoire (31) de données électronique pour la mise en mémoire de valeurs caractéristiques de fonctionnement transmises de l'unité (3) de commande et d'un circuit (25) de microprocesseur, **caractérisé en ce que** l'appareil (6) de contrôle manuel comporte un champ (11) de touches pour la production de valeurs caractéristiques de fonctionnement modifiées et la mise en mémoire de ces valeurs caractéristiques de fonctionnement modifiées dans la mémoire (31) de données électronique et **en ce que** les valeurs caractéristiques de fonctionnement modifiées peuvent être retransmises de la mémoire (31) de données électronique à l'unité (3) de commande par l'intermédiaire du moyen (5) de transmission.

2. Appareil de contrôle manuel suivant la revendication 1, **caractérisé en ce qu'**il est contenu de plus une mémoire (30) de programme qui peut être modifiée pour la mise en mémoire d'un programme d'application adapté aux valeurs caractéristiques de fonctionnement à traiter.

3. Appareil de contrôle manuel suivant la revendication 2, **caractérisé par** un système d'exploitation pour le circuit (25) de microprocesseur ayant une routine de vérification de la présence d'un programme d'application mis en mémoire dans le circuit (36) de mémoire de l'unité (3) de commande, à des fins de transmission à la mémoire (30) de programme.

4. Procédé pour paramétrer des valeurs caractéristiques de fonctionnement d'un appareil électrique en utilisant un appareil (6) de contrôle manuel suivant l'une des revendications précédentes, **caractérisé par** les étapes suivantes :
- liaison de l'appareil (6) de contrôle manuel à l'appareil (2),
- lecture et affichage au moyen du dispositif (10) d'affichage des valeurs caractéristiques de fonctionnement mises en mémoire dans le circuit de mémoire de l'unité (3) de commande,
- mise en mémoire des données correspondant aux valeurs caractéristiques de fonctionnement lues à une adresse qui peut être sélectionnée dans la mémoire (31) de données de l'appareil (6) de contrôle manuel,
- modification d'au moins une valeur caractéristique de fonctionnement par entrée d'au moins une instruction sur l'appareil (6) de contrôle manuel,
- transmission de la valeur caractéristique de fonctionnement modifiée à l'unité (3) de commande et signalisation en retour de la transmission accomplie à l'appareil de contrôle manuel et
- séparation de l'appareil (6) de contrôle manuel de l'appareil (2) .

5. Procédé de paramétrage de valeurs caractéristiques de fonctionnement d'un appareil (2) électrique en utilisant un appareil (6) de contrôle manuel suivant l'une des revendications précédentes, **caractérisé par** les étapes suivantes :
- liaison de l'appareil (6) de contrôle manuel à l'appareil (2),
- lecture et affichage au moyen du dispositif (10) d'affichage des valeurs caractéristiques de fonctionnement mises en mémoire dans le circuit de mémoire de l'unité (3) de commande,
- mise en mémoire des données correspondant aux valeurs caractéristiques de fonctionnement lues à une adresse qui peut être sélectionnée dans la mémoire (31) de données de l'appareil (6) de contrôle manuel,
- séparation de l'appareil (6) de contrôle manuel de l'appareil,
- modification des valeurs caractéristiques de fonctionnement au moyen du programme d'application,
- liaison renouvelée de l'appareil (6) de contrôle manuel au même appareil ou à un appareil identique et transmission des valeurs caractéristiques de fonctionnement modifiées à l'unité (3) de commande électronique de l'appareil.
